(19) Europäisches Patentamt
European Patent Office
Office européen des brevets

(11) **EP 4 478 081 A1**

(12) **DEMANDE DE BREVET EUROPEEN**

(43) Date de publication:
**18.12.2024 Bulletin 2024/51**

(21) Numéro de dépôt: **24182220.4**

(22) Date de dépôt: **14.06.2024**

(51) Classification Internationale des Brevets (IPC):
**G01S 7/40** *(2006.01)* **G09B 9/40** *(2006.01)*

(52) Classification Coopérative des Brevets (CPC):
**G01S 7/4052; G09B 9/40**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **15.06.2023 FR 2306123**

(71) Demandeur: **Thales**
**92190 Meudon (FR)**

(72) Inventeurs:
• **VEYER, Antoine**
**33700 MERIGNAC (FR)**
• **WAXIN, Didier**
**33700 MERIGNAC (FR)**
• **HERNOUST, Thibault**
**33700 MERIGNAC (FR)**

(74) Mandataire: **Lavoix**
**2, place d'Estienne d'Orves**
**75441 Paris Cedex 09 (FR)**

(54) **SYSTÈME INFORMATIQUE DE SIMULATION TEMPS RÉEL D'UN RADAR, DISPOSITIF ET PROCÉDÉ D ENRICHISSEMENT D'UNE VIDÉO RADAR, ET PROGRAMME D ORDINATEUR ASSOCIÉ**

(57) Le système informatique comporte un simulateur radar (12) pour générer des messages vidéo, un système de contrôle et de visualisation (14) pour générer une trame de vidéo radar à partir de chaque message vidéo et un dispositif d'affichage.

Le système informatique (10) comporte en outre un dispositif d'enrichissement (20) pour intercepter chaque message vidéo brut émis par le simulateur radar (12), corriger un niveau d'écho du message vidéo en fonction du terrain et/ou de la présence d'une cible, élaborer un message vidéo enrichi comportant les informations générales du message vidéo brut intercepté et le niveau d'écho corrigé, et appliquer chaque message vidéo enrichi en entrée du système de contrôle et de visualisation (14), de sorte que la vidéo radar affichée par le dispositif d'affichage représente des artefacts du terrain et/ou des cibles.

FIG.2

## Description

La présente invention est relative aux procédés et aux systèmes de génération d'une vidéo radar en simulation temps réel, le radar dont le fonctionnement est simulé étant un radar maritime.

Pour les phases de développement et de test d'un système de contrôle et de visualisation associé à un radar, on utilise un simulateur radar en lieu et place du radar. Ce logiciel a pour objectif d'être représentatif du comportement et des interfaces du radar, mais sans pour autant être représentatif des performances de ce dernier.

En effet, l'objectif est de pouvoir valider les échanges entre le radar et le système de contrôle et de visualisation, en émulant le fonctionnement du radar. Cette validation s'effectue à travers la capacité de pouvoir afficher, sur une interface homme-machine couplée au système de contrôle et de visualisation, une vidéo radar élaborée à partir d'informations vidéo fournies par le simulateur radar.

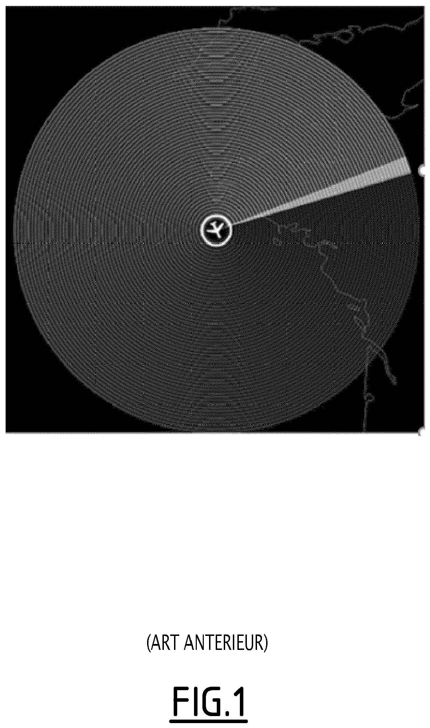

Jusqu'à présent les informations vidéo fournies permettent de reconstruire une vidéo radar qui est une succession de trames, chaque trame représentant une mire simple. Comme illustré sur la figure 1, cette mire simple est centrée sur la position courante du porteur du radar (c'est-à-dire l'aéronef à bord duquel est embarqué le radar). Cette mire est alignée avec un repère géographique local (elle est donc fixe quelle que soit l'orientation de l'aéronef). Cette mire s'étend radialement de manière à correspondre à la portée maximale du radar. Enfin, le secteur angulaire éclairé par le faisceau du radar à l'instant considéré est affiché en surbrillance, et son intensité est diminuée progressivement aux instants suivants afin d'obtenir un effet de rémanence illustrant le mouvement de balayage du faisceau radar. Une telle mire simple suffit pour valider le décodage des informations en provenance du simulateur radar, ainsi que la génération et l'affichage de la vidéo radar par le système de contrôle et de visualisation.

Cependant, si on souhaite utiliser ce système (simulateur radar et système de contrôle et de visualisation) à d'autres fins que le développement et le test (par exemple à des fins d'entrainement du personnel à l'utilisation du radar ou encore à des fins commerciales de présentation des capacités du radar), une vidéo radar correspondant à une mire simple n'est plus suffisante.

En particulier, la vidéo radar se doit d'être plus fidèle, c'est-à-dire plus représentative du fonctionnement réel du radar. Par exemple, la vidéo radar doit montrer la réponse du terrain survolé par l'aéronef et éclairée par le radar et/ou les échos des cibles observées par le radar.

Le but de la présente invention est par conséquent de résoudre ce problème.

Pour cela, l'invention a pour objet un système informatique effectuant une simulation temps réel d'un radar de surveillance maritime et affichant une vidéo radar, comportant :

- un simulateur radar, adapté pour simuler un fonctionnement du radar et émettre un flux de messages vidéo brut, chaque message vidéo brut comportant des informations générales et des informations d'écho, les informations d'écho comportant un niveau d'écho pour chaque case distance d'une pluralité de cases distance ;
- un système de contrôle et de visualisation, adapté pour générer une trame de la vidéo radar à partir de chaque message vidéo appliqué sur une interface d'entrée du système de contrôle et de visualisation ;
- un dispositif d'affichage, connecté au système de contrôle et de visualisation et adapté pour afficher chaque trame reçue du système de contrôle et de visualisation,

le système informatique comportant, en outre, un dispositif d'enrichissement, disposé en coupure entre le simulateur radar et le système de contrôle et de visualisation et adapté pour :

- intercepter chaque message vidéo brut émis par le simulateur radar ;
- corriger le niveau d'écho pour chaque case distance dudit message vidéo brut intercepté en fonction du terrain et/ou de la présence d'une cible dans ladite case distance ;
- élaborer un message vidéo enrichi, ledit message vidéo enrichi comportant les informations générales du message vidéo brut intercepté et le niveau d'écho corrigé pour chaque case distance de la pluralité de cases distance du message vidéo brut intercepté, et,
- appliquer chaque message vidéo enrichi sur l'interface d'entrée du système de contrôle et de visualisation,

de sorte que la vidéo radar affichée par le dispositif d'affichage représente des artefacts du terrain et/ou des cibles.

Suivant un mode de réalisation particulier, un message vidéo comporte : la position du radar, la direction de visée, l'ouverture angulaire du radar, la distance de la première case distance, le nombre N de cases distance, la résolution R en distance des cases distances, et, pour chaque case distance, une valeur représentant le niveau de l'écho reçu par le radar dans la case distance associée.

L'invention concerne aussi un dispositif d'enrichissement de vidéo radar adapté pour être intégré à un système informatique tel que défini ci-dessus.

Suivant des modes de réalisation particuliers, le dispositif d'enrichissement comprend une ou plusieurs des caractéristiques optionnelles suivantes, prises individuellement ou selon toutes les combinaisons techniquement possibles :

- il comporte comportant une base de données stockant un modèle de terrain à partir duquel corriger les échos ;
- il comporte un module de scénario stockant des données sur des cibles à partir desquelles corriger les échos ;
- il comporte un premier module de décodage d'un message vidéo brut, de correction des échos à partir d'une liste d'impacts et de codage d'un message vidéo enrichi, et un second module de calcul de la liste d'impact, les premier et second modules étant exécutés en parallèle l'un de l'autre, une fréquence d'exécution du second module étant plus faible qu'une fréquence d'exécution du premier module ;
- la liste des impacts utilisée pour corriger les échos d'un message vidéo brut est une mise à jour de la liste des impacts utilisée pour corriger les échos d'un message vidéo brut à l'instant précédent, la mise à jour consistant à décaler aléatoirement les points d'impact de la liste des impacts utilisée pour corriger les échos d'un message vidéo brut à l'instant précédent.

L'invention concerne aussi un procédé mis en oeuvre par ordinateur pour enrichir une vidéo radar résultant d'une simulation temps réel d'un radar de surveillance maritime, comportant les étapes consistant à :

- intercepter chaque message d'un flux de messages vidéo brut produit par un simulateur radar, chaque message vidéo comportant des informations générales et un niveau d'écho pour chaque case distance d'une pluralité de cases distance;
- corriger le niveau d'écho de chaque case distance du message vidéo brut intercepté en fonction du terrain et/ou de la présence d'une cible dans la case distance considérée ; et,
- élaborer un message vidéo enrichi, ledit message vidéo enrichi comportant les informations générales du message vidéo brut intercepté et le niveau d'écho corrigé pour chaque case distance de la pluralité de cases distance du message vidéo brut intercepté, et,
- réémettre le message vidéo enrichi vers un système de contrôle et de visualisation couplé à un dispositif d'affichage.

L'invention a également pour objet un programme d'ordinateur comportant des instructions logicielles qui, lorsqu'elles sont exécutées par un ordinateur, mettent en oeuvre un procédé tel que défini ci-dessus.

L'invention et ses avantages seront mieux compris à la lecture de la description détaillée qui va suivre d'un mode de réalisation particulier, donnée uniquement à titre d'exemple non limitatif, cette description étant faite en se référant aux dessins annexés sur lesquels :

- La Figure 1 est un exemple d'une trame d'une vidéo radar représentant une mire simple selon l'état de la technique ;
- La Figure 2 est une représentation sous forme de blocs fonctionnels d'un système radar pour afficher une vidéo radar en simulation temps réel, selon un mode de réalisation préféré de l'invention ;
- La Figure 3 est un exemple d'une trame d'une vidéo radar enrichie affichée par le système radar de la Figure 2 ;
- La Figure 4 est une représentation schématique d'un procédé mis en oeuvre par le système de la figure 2 pour enrichir une vidéo radar ; et,
- Les Figures 5, 6, 7 et 8 illustrent les calculs effectués par le système radar de la figure 2.

De manière générale, l'invention consiste, au lieu d'intégrer au simulateur radar des algorithmes supplémentaires de génération d'informations vidéo enrichies, à intercaler un composant d'enrichissement des informations vidéo entre le simulateur radar et le système de contrôle et visualisation. Le simulateur radar et le système de contrôle et de visualisation ne sont donc pas modifiés.

L'avantage de cette solution est de ne pas avoir à modifier le simulateur radar. Il n'a donc pas à être validé ou qualifié une nouvelle fois pour que le système radar dispose de cette fonctionnalité d'affichage avancé.

Ce composant d'enrichissement a pour fonction d'intercepter les messages intégrant les informations vidéo en sortie du simulateur radar, d'enrichir le contenu de chaque message avec des échos représentatifs du terrain éclairé par le radar et/ou des cibles éclairées par le radar, et finalement de réémettre un message d'informations vidéo enrichi vers le système de contrôle et de visualisation.

Ce dernier génère une vidéo radar enrichie à partir des messages qu'il reçoit. Le système de contrôle et de visualisation génère ainsi une vidéo radar affichant des artefacts dus au terrain observé par le radar (nature du terrain - terre/mer, zones d'ombre associées au relief) et/ou aux cibles présentes dans le domaine observé.

Dans un message provenant du simulateur radar, le composant d'enrichissement remplace ainsi uniquement les informations relatives aux niveaux des échos reçus par le radar pour chaque case distance, toutes les autres informations du message originel (position du porteur, direction de visée, résolution angulaire, nombre de cases distance, etc.) étant inchangées.

Le composant d'enrichissement doit effectuer ces opérations à la volée, c'est-à-dire en n'introduisant qu'un temps de latence réduit entre l'instant de réception d'un message brut et l'instant de réémission du message enrichi correspondant.

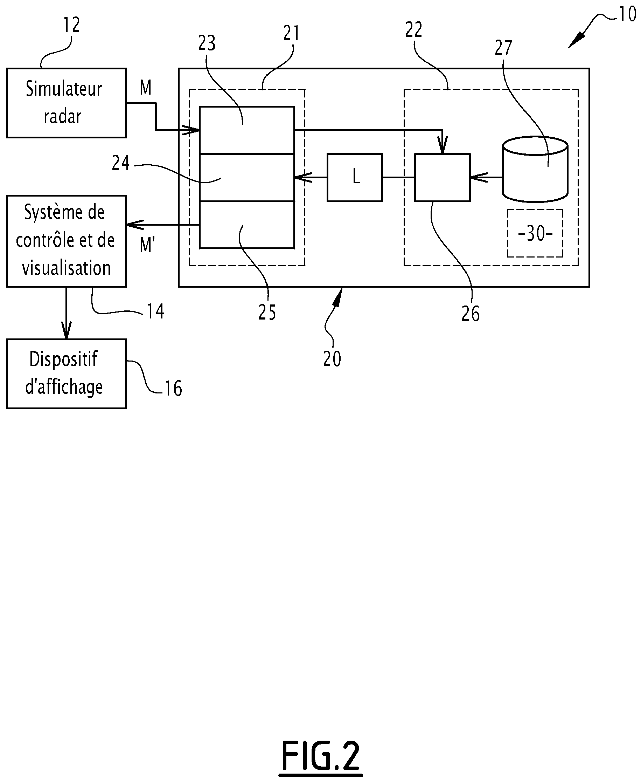

La Figure 2 illustre schématiquement un mode de réalisation d'un système informatique pour afficher une vidéo radar enrichie en simulation temps réel d'un radar maritime.

Le système informatique 10 comporte un simulateur radar 12 et un système de contrôle et de visualisation 14, ainsi qu'un dispositif d'affichage 16.

Le système 10 comporte en outre un composant d'enrichissement 20, disposé en coupure entre le simulateur radar 12 et le système de contrôle et de visualisation 14.

Le simulateur radar 12 est un logiciel dont l'exécution permet de simuler, en temps réel, le comportement et les interfaces d'un radar particulier, de préférence un radar aéroporté maritime, au cours de la réalisation d'une mission de surveillance.

En particulier, le simulateur radar 12 émet un flux de messages vidéo. Plus précisément, le simulateur radar 12 délivre périodiquement un message M contenant des informations vidéo.

Le format d'un tel message vidéo est défini par le radar qui est simulé par le simulateur radar 12.

Pour un radar maritime, un tel message comporte des informations générales et des informations d'écho, les informations d'écho comportant un niveau d'écho pour chaque case distance d'une pluralité de cases distance

Plus particulièrement, dans un mode de réalisation préféré, un tel message comporte :

- la position P du radar selon trois coordonnées (latitude, longitude, altitude) dans un référentiel terrestre ;
- la direction de visée D (donnée par exemple par un angle d'azimut $\gamma$ par rapport à la direction du nord géographique) ;
- l'ouverture angulaire $\alpha$ du radar, et, par conséquent, du domaine à afficher ;
- la distance de la première case distance dmin, le nombre N de case distance, et la résolution r en distance des cases distances ;
- enfin, pour chaque case distance (indexée par l'entier n entre 1 et N), une valeur représentant le niveau En de l'écho reçu par le radar.

Pour minimiser la taille des messages, on choisit par exemple de coder le niveau des échos sur un octet. La valeur nulle représentant l'absence de signal reçu et le niveau 255 correspondant au niveau maximum.

Le simulateur radar 12 émet des messages M de façon périodique avec une fréquence telle que les secteurs angulaires du faisceau radar correspondant à chaque message sont jointifs. Par exemple, si l'ouverture angulaire $\alpha$ est de 0,5° et si l'antenne tourne à la vitesse de 20° par seconde, le simulateur radar 12 émet quarante messages vidéo à la seconde pour que les domaines élémentaires observés à chaque pas de temps soient jointifs.

Le système de contrôle et de visualisation 14 est un logiciel dont l'exécution permet notamment de générer les trames successives d'une vidéo radar à partir de messages d'informations vidéo brute reçus sur son interface d'entrée.

Le système de contrôle et de visualisation 14 est connecté au dispositif d'affichage 16. Il s'agit par exemple de l'écran d'une interface homme machine - IHM.

Le dispositif d'affichage 16 est adapté pour afficher successivement les trames reçues du système de contrôle et de visualisation 14 et ainsi permettre à un opérateur du système radar informatique de visualiser la vidéo radar.

Selon l'état de la technique, les messages de vidéo radar reçu par le système 14 sont directement ceux délivré par le simulateur 12. Ceux-ci ne comportent que des informations brutes correspondant à une mire simple.

Selon l'invention, le composant d'enrichissement 20 permet d'enrichir le contenu de chaque message de vidéo M produit par le simulateur radar 12, de manière à fournir au système de contrôle et de visualisation 14 des messages de vidéo enrichis M' lui permettant d'afficher une vidéo radar qui présente des artéfacts du terrain et/ou des cibles éclairées par le radar.

Le dispositif d'enrichissement 20 est un ordinateur comportant une unité de traitement d'informations formée par exemple d'une mémoire et d'un processeur associé à la mémoire.

Les modules et unités du dispositif d'enrichissement 20 sont réalisés chacun sous forme d'un logiciel, ou d'une brique logicielle, exécutable par le processeur. La mémoire du dispositif d'enrichissement 20 est alors apte à stocker ces logiciels. Le processeur du dispositif d'enrichissement 20 est alors apte à exécuter chacun de ces logiciels.

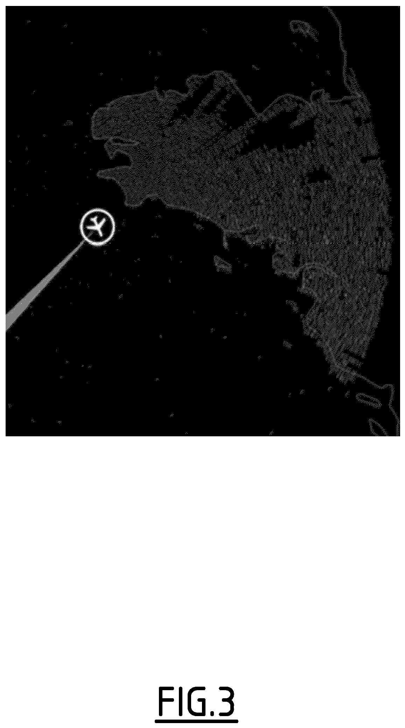

Une trame d'une vidéo radar enrichie est représentée sur la Figure 3. Par rapport à la mire simple de la Figure 1, la mire de la Figure 3 affiche une différence de réponse de la surface de la mer et de la surface de la terre, là où la mire simple de la Figure 1 ne permettait pas d'effectuer une distinction entre surface de mer et surface de terre.

Le composant d'enrichissement 20 a pour fonction, sans modifier le format des messages de vidéo, de calculer des niveaux d'écho pour chaque case distance afin de tenir compte du terrain et/ou des cibles éclairés par le radar.

Dans une première variante, le calcul des échos porte sur le type de terrain survolé par l'aéronef et imagé par le radar. En effet, les échos dépendent de la nature du terrain, terre ou mer. Les échos dépendent également du relief du terrain, certaines montagnes masquant la propagation de l'onde émise par le radar de sorte qu'une ombre apparait sur la représentation du domaine observé dans la vidéo radar.

Dans une seconde variante, le calcul des échos porte sur les cibles présentes dans le domaine observé par le radar.

Comme représenté sur la Figure 2, le composant 20 comporte de préférence deux modules principaux, à savoir un premier module 21 et un second module 22.

Le premier module 21 est un module de décodage/codage des messages vidéo.

Celui-ci comporte une unité 23 de décodage des messages vidéo M délivrés en sortie du simulateur radar 12.

Celui-ci comporte une unité 24 de modification du niveau des échos du message M réceptionné, à partir d'une liste d'impacts L.

Enfin, le premier module 21 comporte une unité 25 de codage des messages vidéo enrichis M', qui sont réémis vers le système de contrôle et de visualisation 14.

Le second module 22 est un module de calcul de la liste d'impacts L.

Celui-ci comporte une unité 26 de calcul des impacts et une base de données 27 stockant un modèle de terrain correspondant au terrain survolé par l'aéronef et imagé par le radar.

L'unité 26 est adaptée pour calculer les positions des impacts de la ligne de visée du radar avec le terrain et générer une liste d'impacts L.

Pour ce faire, l'unité 26 utilise les informations générales, notamment de visée du radar, contenues dans un message M décodé par l'unité 23 du premier module 21, ainsi que les données de terrain correspondant à cette direction de visée, en effectuant une requête adaptée sur la base de données 27.

Il est nécessaire d'exécuter en parallèle les premier et second modules 21 et 22.

L'exécution du premier module 21 est synchronisée avec la fréquence de réception des messages en provenance du simulateur radar 12, de manière à être capable d'émettre un message enrichi à la même fréquence. Le premier module 21 doit donc fonctionner en temps réel par rapport au flux des messages vidéos, en n'introduisant qu'une faible latence entre la réception d'un message brut et l'émission d'un message enrichi.

En revanche, le second module 22 de calcul des impacts nécessite un temps de calcul important qui n'est pas compatible de cette contrainte temps réel. Il est par conséquent exécuté à une fréquence plus faible que le premier module 21, par exemple tous les K pas de temps. Dans ce qui suit K est pris par exemple égal à 4.

Par conséquent, le message vidéo reçu au pas de temps i, tel que i=0 mod(K), permet de déterminer la position du radar et sa direction de visée.

A partir de ces informations et du modèle de terrain, le second module 22 calcule une liste d'impacts L pour le pas de temps i.

Le premier module 21 utilise cette liste L pour les pas de temps i+1, i+2, i+3 et i+4 pour calculer les échos du terrain et reconstruire des messages enrichis.

Avantageusement, le premier module 21 reprend la liste d'impacts mais en la décalant angulairement pour tenir compte du balayage du faisceau radar.

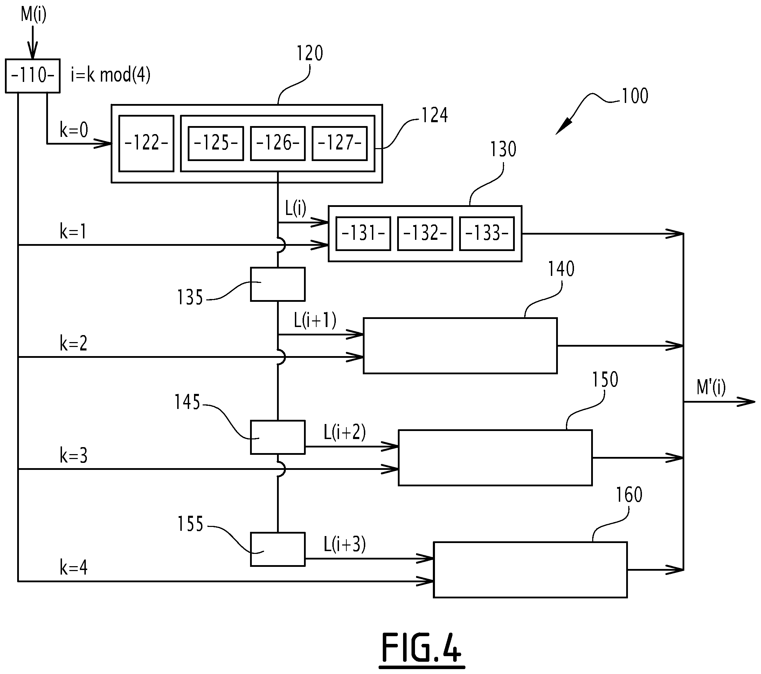

Un mode de réalisation du procédé va maintenant être présenté en relation avec la Figure 4 et les Figures 5 à 8 pour expliquer les calculs effectués.

Dans une étape 110 du procédé 100, un message M au pas de temps courant i est reçu du simulateur radar 12.

L'entier i permet d'indexer chaque pas de temps et, par conséquent, chaque message, M(i).

L'étape 110 permet de tester la valeur de l'entier i. Ce test consiste à déterminer la valeur de i modulo K : i=k mod(K), sachant que dans le présent exemple K=4.

Si k=0, l'étape 120 du procédé 100 est exécutée.

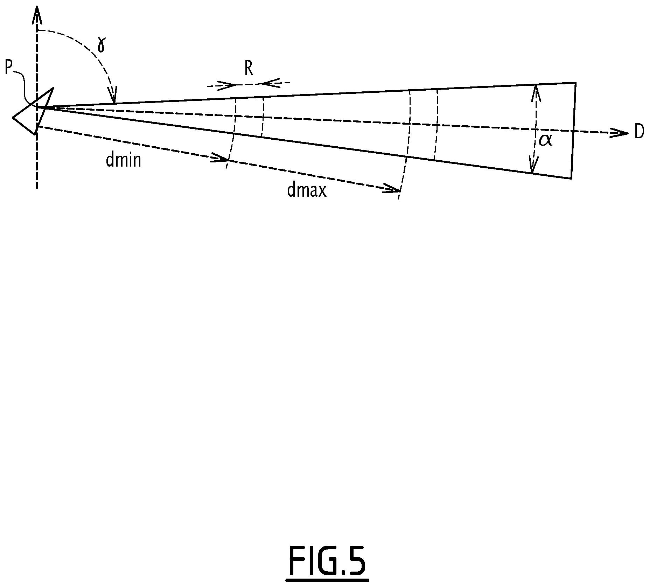

Dans l'étape 120, le premier module 21 décode (étape 122) le message M(i) pour extraire de ses informations générales, la position P du radar (notamment l'altitude H du radar), l'orientation de la ligne de visée D du radar, la distance minimale dmin, le nombre N de cases distances, et la résolution des cases distances R. La figure 5 illustre ces différentes informations.

Ces informations sont transmises au second module 22.

A l'étape 124, l'unité 26 du second module 22 est exécutée pour calculer une liste des points d'impact de la ligne de visée sur le terrain à l'instant i, L(i).

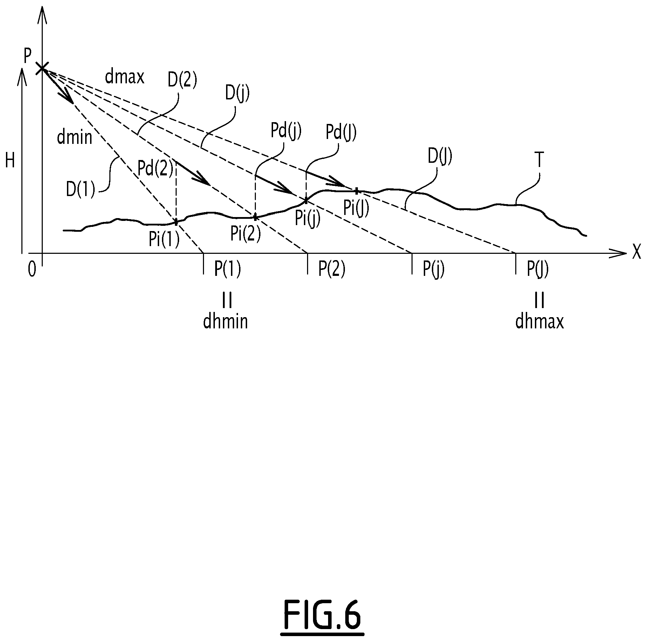

Comme représenté sur la figure 6, l'unité 26 détermine (étape 125) un axe horizontal X comme la projection de la ligne de visée D dans le plan d'altitude nulle. L'origine O de l'axe horizontal X correspond à la projection de la position P du radar dans ce plan d'altitude nulle.

L'unité 26 détermine l'intervalle des distances couvertes par le radar. Cet intervalle s'étend entre la distance minimum dmin et la distance maximale dmax. Cette dernière est calculée par la relation suivante : dmax = dmin + (N-1) x R.

Cet intervalle en distance est ensuite transposé en une couverture horizontale, c'est-à-dire selon l'axe horizontal X, en tenant compte de l'altitude H du radar. Cette couverture horizontale s'étend entre dhmin et dhmax.

La couverture horizontale est ensuite échantillonnée selon l'axe horizontal avec un pas de calcul c, prédéterminé. Ce pas de calcul c est choisi en fonction de la puissance de l'ordinateur exécutant le second module 22. On obtient un ensemble de points P(j) le long de l'axe horizontal, tels que :

$$P(j) = dhmin + (j-1) \times c$$

L'indice j varie entre 1 et J.

Dans l'étape 126 suivante, l'unité 26 interroge la base de données 27 pour connaître le relief entre l'origine O et le point dhmax selon l'axe horizontal. Le relief dans le plan vertical passant par la ligne de visée est donné par le modèle de terrain T mémorisé dans la base de données 27.

Pour chaque point P(j), l'unité 26 calcule (étape 127) l'intersection avec le terrain T de la droite de visée D(j) (reliant la position tridimensionnelle P du radar avec le point P(j) considéré). Par exemple, le calcul consiste à se déplacer le long de la droite de visée d'un pas élémentaire, et de vérifier si la nouvelle position sur cette droite de visée est au-dessus du terrain T, et d'itérer ce déplacement tant que l'on reste au-dessus du terrain T et de considérer le point d'impact comme la position le long de la droite de visée dès que l'on est passé au-dessous du terrain T. Ce point d'intersection ou point d'impact est noté Pi(j).

En variante, le calcul du point d'impact d'une droite de visée D(j) avec le relief étant couteux en termes de temps de calcul, puisqu'il faut parcourir la droite de visée depuis la position P du radar jusqu'au point d'intersection avec le relief, le processus de calcul suivant est avantageusement mis en oeuvre :
Le premier point d'impact Pi(1) est calculé en suivant la droite de visée D(1) depuis la position P du radar jusqu'à l'intersection avec le terrain T.

Puis, pour chaque point d'impact suivant, le point d'impact précédent Pi(j-1) est projeté, selon une direction verticale, sur la droite de visée courante D(j) pour obtenir un point de départ Pd(j). Puis la droite de visée D(j) est parcourue depuis le point de départ Pd(j), jusqu'au point d'intersection avec le terrain T.

Cette façon de procéder présente l'avantage de diminuer fortement les distances à parcourir le long des droites de visée et de réduire par conséquent le temps de calcul.

La liste L(i) à l'instant i rassemble l'ensemble des points d'impact Pi(j) avec le relief.

Avantageusement, pour chaque point d'impact Pi(j), la liste indique la distance d(j) entre le radar et le point d'impact, ainsi qu'un attribut sur la nature du terrain. Par exemple, si l'altitude du point d'impact Pi(j) est proche de zéro (i.e. inférieure à un seuil de quelques mètres), on considère qu'il s'agit d'un écho de mer et, dans le cas contraire, d'un écho de terre.

A l'issue de l'étape 120, la liste L(i) est mise à disposition du premier module 21 pour corriger les échos des messages aux K instants suivants, c'est-à-dire i+1, i+2, i+3 et i+4 (avec i égal à zéro modulo k).

Dans l'étape 130, à l'instant i+1, l'unité 24 utilise la liste des points d'impact L(i) pour la reconstitution des niveaux des échos dans un message à réémettre.

Cette reconstitution est par exemple effectuée de la manière suivante.

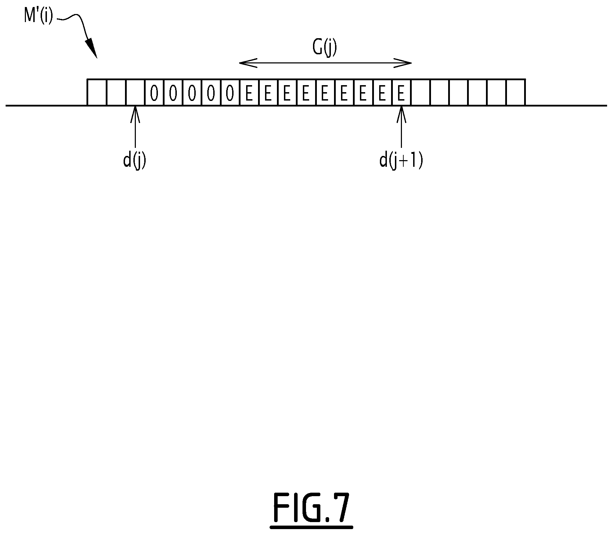

Comme représenté sur la figure 7, un message comporte un ensemble de champ d'écho, la valeur de chaque champ d'écho correspondant au niveau de l'écho reçu pour la case distance correspondante. Dans ce qui suit, on confond un champ d'écho du message et la case distance associée.

Pour les cases distance situées à l'extérieur de l'intervalle défini par les distances du premier et du dernier points d'impact de la liste L(i), le niveau de l'écho est nul.

A l'intérieur de cet intervalle, pour les cases distance situées entre les distances d(j) et d(j+1) de deux points d'impact Pi(j) et Pi(j+1) successifs en distance, l'unité 24 :

- détermine (étape 131) un groupe de cases distances pour le calcul des échos,
- affecte (étape 132) la valeur nulle pour les niveaux des échos pour les cases distances hors de ce groupe ;
- calcule (étape 133) des niveaux d'échos pour les cases distances de ce groupe en fonction du type de terrain.

La détermination d'un groupe de cases distances est par exemple donné par la formule suivante :

$$G(j) = (d(j+1)\text{-}d(j)) \times (1 - \beta \times \sigma)$$

Avec β un pourcentage de l'intervalle d(j+1)-d(j) où les échos seront nuls (les cases de la partie gauche de l'intervalle représenté sur la figure 7 dont les cases sont à la valeur « 0 ») et σ un nombre aléatoire entre 0 et 1. Il s'agit de paramètres de configuration.

Dans une case distance du groupe (i.e. de la partie droite de l'intervalle représenté sur la figure 7 dont les cases sont à la valeur « E »), le niveau d'un écho est donné par :

$$E_n = E_{min} + (E_{max} - E\_min) \times \theta$$

Avec n l'indice de la case distance, $E_{min}$ et $E_{max}$ des niveaux minimum et maximum pour les échos qui dépendent de la nature du terrain (sol ou mer) pour le point d'impact d'indice j+1 et θ un nombre aléatoire entre 0 et 1. Ces valeurs sont des données de configuration.

Le message ainsi enrichi M'(i+1) est transmis au système de contrôle et de visualisation 14 pour affichage de la trame correspondante.

De préférence, entre deux instants de détermination de la liste d'impacts (i et i+K), i.e. entre deux itérations de l'étape 120, les points d'impact de la liste L(i) disponible sont mis à jour en modifiant de façon aléatoire les distances d(j) des points d'impacts Pi(j). Par exemple, l'étape 135 permet de mettre à jour la liste L(i) pour obtenir une liste mise à jour L(i+1). Pour cette étape, la relation suivante est utilisée :

$$d'(j) = d(j) + \delta \times \lambda$$

où d'est la distance mise à jour à partir de d, δ est un décalage et λ est une valeur tirée aléatoirement dans une distribution de probabilités entre 0 et 1. il s'agit encore de données de configuration prédéterminées.

Lorsque l'étape 140 est réalisée pour construire le message vidéo enrichi à l'instant i+2, M'(i+2) en utilisant la liste mise à jour L(i+1). L'étape 140 est similaire à l'étape 130.

De même, l'étape 145 permet de mettre à jour la liste L(i+1) pour obtenir une liste L(i+2) légèrement différente.

L'étape 150 est réalisée pour construire le message vidéo enrichi à l'instant i+3, M'(i+3), en utilisant la liste mise à jour L(i+2). L'étape 150 est similaire à l'étape 130.

De même, l'étape 155 permet de mettre à jour la liste L(i+2) pour obtenir une liste L(i+3) légèrement différente.

L'étape 160 est réalisée pour construire le message vidéo enrichi à l'instant i+4, M'(i+4) en utilisant la liste mise à jour L(i+3). L'étape 160 est similaire à l'étape 130.

L'objectif de faire varier le contenu des messages enrichis successifs de façon à éviter d'avoir, dans la vidéo, un motif à l'intérieur du faisceau radar qui se répète entre plusieurs trames successives.

En variante ou en combinaison, le procédé permet d'enrichir une vidéo brute avec les échos de cibles maritimes.

Cette fonctionnalité nécessite de disposer d'un générateur de scénarios permettant de délivrer la position, le cap et le type de chaque cible potentielle. Ce module 30 est représenté en pointillés sur la Figure 2.

L'unité 26 du second module du composant d'enrichissement détermine tout d'abord l'ensemble des cibles dont la distance au radar est comprise dans la zone de couverture du radar, c'est-à-dire inférieure à dmax+R.

En fonction du type de cible, l'unité 26 du second module accède aux dimensions de longueur et largeur de cette cible.

L'unité 26 détermine ensuite la présentation géométrique de la cible par rapport au radar (orientation de l'axe longitudinal Z de la cible par rapport à la direction de visée).

Les angles d'azimut minimum et maximum de la cible et les caractéristiques de résolution angulaire permettent de déduire le nombre de secteurs angulaires et par conséquent de messages successifs nécessaires pour couvrir la cible.

Dans chaque message, en fonction de la résolution en distance R et des distances dmin et dmax, on en déduit les cases distances occupées par la cible.

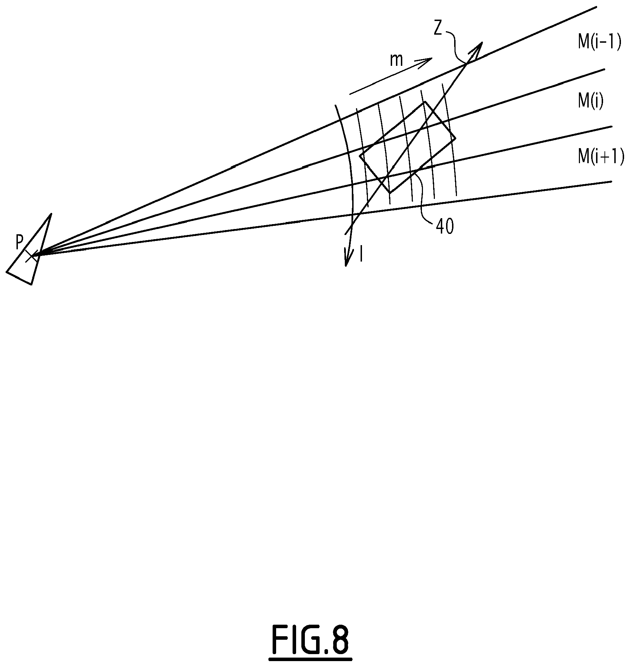

Cela permet donc de définir une grille rectangulaire dans laquelle s'inscrit la cible, comme cela est illustré sur la Figure 8.

Chaque case couvrant la cible se voit affecter un coefficient $Coeff_{Dm}$ compris entre 0 et 1 suivant la direction radiale (coordonnée en distance) et un coefficient $Coeff_{Al}$ compris entre 0 et 1 suivant la direction tangentielle (coordonnée angulaire). Le coefficient résultant pour chaque case est le produit de ces deux coefficients.

Pour la case d'indice m en distance et la colonne d'indice I en angulaire, le coefficient résultant vaut :

$$\text{Coeff}_{m,l} = Coeff_{Dm} \times Coeff_{Al}$$

La liste d'impacts comporte donc les cases qui couvrent la cible et pour chaque case le coefficient calculé.

En fonction du type de la cible, donnée également fournie par le module 30, on dispose d'une valeur minimum Emin et d'une valeur maximale Emax du niveau de l'écho. Il s'agit encore de données de configuration du programme mis en oeuvre.

L'unité 24 déduit le niveau d'écho dans chaque case selon la formule suivante :

$$\text{E0}_{m,l} = \text{Emin} + \text{Coeff}_{m,l} \times (Emax - Emin)$$

A cette valeur est avantageusement appliquée une fluctuation aléatoire calculée de la manière suivante :

$$\text{F}_{m,l} = (1 - 2 \times \varphi) * V$$

Avec φ résulte d'un tirage aléatoire dans l'intervalle entre 0 et 1 et V est le pourcentage maximum de fluctuation de la valeur compris entre 0 et 1. Il s'agit de données de configuration.

Le niveau final d'écho intégré à un message enrichi est alors :

$$\text{E}_{m,l} = \text{E0}_{m,l} \times (1 + \text{F}_{m,l})$$

Ce niveau est éventuellement borné suivant les valeurs autorisées (par exemple, si le niveau est codé sur un octet, il sera ramené dans l'intervalle [0,255]).

**Revendications**

1. Système informatique (10) effectuant une simulation temps réel d'un radar de surveillance maritime et affichant une vidéo radar, comportant :

   - un simulateur radar (12), adapté pour simuler un fonctionnement du radar et émettre un flux de messages vidéo brut, chaque message vidéo brut comportant des informations générales et des informations d'écho, les informations d'écho comportant un niveau d'écho pour chaque case distance d'une pluralité de cases distance ;
   - un système de contrôle et de visualisation (14), adapté pour générer une trame de la vidéo radar à partir de chaque message vidéo appliqué sur une interface d'entrée du système de contrôle et de visualisation (14) ;
   - un dispositif d'affichage (16), connecté au système de contrôle et de visualisation (14) et adapté pour afficher chaque trame reçue du système de contrôle et de visualisation (14),

**caractérisé en ce que** le système informatique (10) comporte, en outre, un dispositif d'enrichissement (20), disposé en coupure entre le simulateur radar (12) et le système de contrôle et de visualisation (14) et adapté pour :

- intercepter chaque message vidéo brut émis par le simulateur radar (12) ;
- corriger le niveau d'écho pour chaque case distance dudit message vidéo brut intercepté en fonction du terrain et/ou de la présence d'une cible dans ladite case distance ;
- élaborer un message vidéo enrichi, ledit message vidéo enrichi comportant les informations générales du message vidéo brut intercepté et le niveau d'écho corrigé pour chaque case distance de la pluralité de cases distance du message vidéo brut intercepté, et,
- appliquer chaque message vidéo enrichi sur l'interface d'entrée du système de contrôle et de visualisation,

de sorte que la vidéo radar affichée par le dispositif d'affichage représente des artefacts du terrain et/ou des cibles.

2. Système informatique selon la revendication 1, dans lequel un message vidéo comporte :

- la position du radar (P) ;
- la direction de visée (D) ;
- l'ouverture angulaire ($\alpha$) du radar,
- la distance de la première case distance (dmin),
- le nombre N de cases distance,
- la résolution R en distance des cases distances ; et,
- pour chaque case distance, une valeur représentant le niveau de l'écho reçu par le radar dans la case distance associée.

3. Dispositif d'enrichissement de vidéo radar adapté pour être intégré à un système informatique selon l'une quelconque des revendications 1 à 2.

4. Dispositif d'enrichissement selon la revendication 3, comportant une base de données (27) stockant un modèle de terrain à partir duquel corriger les échos.

5. Dispositif d'enrichissement selon la revendication 3 ou la revendication 4, comportant un module de scénario (30) stockant des données sur des cibles à partir desquelles corriger les échos.

6. Dispositif d'enrichissement selon l'une quelconque des revendications 3 à 5, comportant un premier module (21) de décodage d'un message vidéo brut, de correction des échos à partir d'une liste d'impacts et de codage d'un message vidéo enrichi, et un second module (22) de calcul de la liste d'impact, les premier et second modules étant exécutés en parallèle l'un de l'autre, une fréquence d'exécution du second module étant plus faible qu'une fréquence d'exécution du premier module.

7. Dispositif d'enrichissement selon la revendication 6, dans lequel la liste des impacts utilisée pour corriger les échos d'un message vidéo brut est une mise à jour de la liste des impacts utilisée pour corriger les échos d'un message vidéo brut à l'instant précédent, la mise à jour consistant à décaler aléatoirement les points d'impact de la liste des impacts utilisée pour corriger les échos d'un message vidéo brut à l'instant précédent.

8. Procédé (100) mis en oeuvre par ordinateur pour enrichir une vidéo radar résultant d'une simulation temps réel d'un radar de surveillance maritime, comportant les étapes consistant à :

- intercepter chaque message d'un flux de messages vidéo brut produit par un simulateur radar, chaque message vidéo comportant des informations générales et un niveau d'écho pour chaque case distance d'une pluralité de cases distance;
- corriger le niveau d'écho de chaque case distance du message vidéo brut intercepté en fonction du terrain et/ou de la présence d'une cible dans la case distance considérée ; et,
- élaborer un message vidéo enrichi, ledit message vidéo enrichi comportant les informations générales du message vidéo brut intercepté et le niveau d'écho corrigé pour chaque case distance de la pluralité de cases distance du message vidéo brut intercepté, et,
- réémettre le message vidéo enrichi vers un système de contrôle et de visualisation (14) couplé à un dispositif d'affichage.

9. Programme d'ordinateur comportant des instructions logicielles qui, lorsqu'elles sont exécutées par un ordinateur, mettent en oeuvre un procédé selon la revendication 8.

(ART ANTERIEUR)

# FIG.1

**FIG.2**

FIG.3

FIG.4

EP 4 478 081 A1

## FIG.5

## FIG.6

M'(i)

G(j)

| | | | 0 | 0 | 0 | 0 | 0 | E | E | E | E | E | E | E | E | | | | | |

d(j)

d(j+1)

# FIG.7

## FIG.8

Europäisches
Patentamt

European
Patent Office

Office européen
des brevets

**RAPPORT DE RECHERCHE EUROPEENNE**

Numéro de la demande

EP 24 18 2220

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 3 801 720 A (RYMER H) 2 avril 1974 (1974-04-02) * le document en entier * ----- | 1-9 | INV. G01S7/40 G09B9/40 |
| A | US 2 994 966 A (BENJAMIN SENITSKY ET AL) 8 août 1961 (1961-08-08) * le document en entier * ----- | 1-9 | |
| A | US 2017/139038 A1 (REIL ANDREAS [DE] ET AL) 18 mai 2017 (2017-05-18) * le document en entier * ----- | 1-9 | |
| A | US 2022/057484 A1 (JONES JAYLAN S [US] ET AL) 24 février 2022 (2022-02-24) * le document en entier * ----- | 1-9 | |

**DOMAINES TECHNIQUES RECHERCHES (IPC)**

G01S
G09D
G09B

Le présent rapport a été établi pour toutes les revendications

| Lieu de la recherche | Date d'achèvement de la recherche | Examinateur |
|---|---|---|
| Munich | 5 novembre 2024 | Rudolf, Hans |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 18 2220

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-11-2024

| Document brevet cité au rapport de recherche | | Date de publication | Membre(s) de la famille de brevet(s) | | Date de publication |
|---|---|---|---|---|---|
| US 3801720 | A | 02-04-1974 | AU | 445141 B2 | 14-02-1974 |
| | | | BE | 774648 A | 14-02-1972 |
| | | | CA | 969258 A | 10-06-1975 |
| | | | DE | 2153347 A1 | 31-05-1972 |
| | | | FR | 2111894 A1 | 09-06-1972 |
| | | | GB | 1318218 A | 23-05-1973 |
| | | | NL | 7114798 A | 03-05-1972 |
| | | | US | 3801720 A | 02-04-1974 |
| US 2994966 | A | 08-08-1961 | AUCUN | | |
| US 2017139038 | A1 | 18-05-2017 | AUCUN | | |
| US 2022057484 | A1 | 24-02-2022 | EP | 4200639 A1 | 28-06-2023 |
| | | | US | 2022057484 A1 | 24-02-2022 |
| | | | WO | 2022040424 A1 | 24-02-2022 |

EPO FORM P0460

Pour tout renseignement concernant cette annexe : voir Journal Officiel de l'Office européen des brevets, No.12/82